# EUROPÄISCHE PATENTSCHRIFT

(11) **EP 2 225 131 B1**
(45) Veröffentlichungstag und Bekanntmachung des Hinweises auf die Patenterteilung: **06.07.2011**
(21) Anmeldenummer: 08858345.5
(22) Anmeldetag: 02.12.2008
(51) Int. Cl.: B60T 7/10, G05G 1/04

(54) **KRAFTFAHRZEUG-FESTSTELLBREMSE**
MOTOR VEHICLE PARKING BRAKE
FREIN DE STATIONNEMENT DE VÉHICULE AUTOMOBILE

(30) Priorität: 05.12.2007 DE 202007017096 U
(43) Veröffentlichungstag der Anmeldung: 08.09.2010
(73) Patentinhaber: Edscha Engineering GmbH, 42855 Remscheid (DE)
(72) Erfinder: KROMPASS, Johann, 94034 Passau (DE)
(74) Vertreter: Sparing, Rolf Klaus
(86) Internationale Anmeldenummer: PCT/DE2008/001991
(87) Internationale Veröffentlichungsnummer: WO 2009/071059

(56) Entgegenhaltungen:
- EP-A- 1 752 347
- DE-A1- 19 936 733
- DE-U1- 20 210 489
- US-A- 6 073 513

## Beschreibung

Die Erfindung betrifft eine Feststellbremse für ein Kraftfahrzeug nach dem Oberbegriff des Anspruchs 1 >bzw eine Druckstange für eine solche feststellbremse.

Aus der Praxis sind Feststellbremsen für Kraftfahrzeuge bekannt, welche einen schwenkbar an einem Hebelhalter angeordneten Bremsbetätigungshebel, eine Feststelleinrichtung, umfassend eine an dem Hebelhalter angeordnete Verzahnung und eine in die Verzahnung eingreifende Feststellklinke, eine Kopplungseinheit zur Kopplung des Bremsbetätigungshebels mit einem Bremsseil sowie eine Löseeinrichtung aufweisen. In einer Ausführungsform solcher Feststellbremsen umfasst die Löseeinrichtung eine zwischen einer Ruheposition und einer Löseposition entlang des Bremsbetätigungshebels verlagerbare Druckstange, wobei die Feststellklinke schwenkbar an der Druckstange angelenkt ist. Die Feststellklinke ist als Doppelhebel mit einem ersten Hebelarm und einem zweiten Hebelarm ausgebildet und in einem die Hebelarme verbindenden mittleren Bereich schwenkbar an dem Bremsbetätigungshebel gelagert. An einem dem mittleren Bereich abgewandten Ende des ersten Hebelarms umfasst die Feststellklinke eine Eingriffsnase für ein Eingreifen in die Verzahnung, wobei an einem gegenüberliegenden, dem mittleren Bereich abgewandten Ende des zweiten Hebelarms die schwenkbare Anlenkung der Feststellklinke an die Druckstange vorgesehen ist. Ein Federelement spannt die Druckstange gegenüber dem Bremsbetätigungshebel in Richtung der Ruheposition der Druckstange vor, wobei durch die Vorspannung zugleich die Eingriffsnase der Feststellklinke in Richtung der Verzahnung vorgespannt wird. Zur Betätigung der Feststellbremse wird der Bremsbetätigungshebel gegenüber dem Hebelhalter verschwenkt, so dass das Bremsseil angezogen wird. Zum Lösen der Feststellbremse wird die Druckstange entgegen der Vorspannung des Federelements aus der Ruheposition in ihre Betätigungsposition verlagert, wobei gleichzeitig die Eingriffsnase der Feststellklinke aus der Verzahnung ausgerückt wird, was ein Zurückschwenken des Bremsbetätigungshebels in seine Ausgangsposition ermöglicht. Bei der beschriebenen Kraftfahrzeug-Feststellbremse wird die Druckstange für ein Lösen der Feststellbremse entgegen der Vorspannung des Federelements gegenüber dem Bremsbetätigungshebel verlagert. Nach Ende des Lösevorgangs wird die Druckstange durch das Federelement angetrieben in ihre Ruheposition zurückverlagert, wobei die Druckstange am Ende der Rückbewegung in Ihrer Ruheposition anschlägt und dabei starken mechanischen Kräften ausgesetzt ist. Durch ein Anschlagen der Druckstange in ihrer Ruheposition werden zum einen nachteilig ungewünschte Geräusche verursacht, zum anderen werden an der Druckstange angeordnete Teile der Löseeinrichtung mechanisch stark belastet. Insbesondere wenn die Feststellbremse als eine Handfeststellbremse ausgebildet ist, wird ein als Auslöseelement ausgebildeter Druckknopf einer großen Beschleunigung bzw. einer zeitlich sehr raschen Änderung der Beschleunigung ausgesetzt, so dass es zu einer mechanischen Beschädigung des Druckknopfes kommen kann.

DE 199 36 733 A1 beschreibt eine Feststellbremse für ein Kraftfahrzeug, umfassend einen schwenkbar an einem Hebelhalter angeordneten Bremsbetätigungshebel, eine Feststelleinrichtung, die eine an dem Hebelhalter angeordnete Verzahnung und eine Feststellklinke aufweist, eine Kopplungseinrichtung zur Kopplung des Bremsbetätigungshebels mit einem Bremsseil sowie eine Löseeinrichtung, die eine entlang des Bremsbetätigungshebels aus einer Ruheposition in eine Löseposition verlagerbare Druckstange umfasst. Die Feststellklinke ist hier ebenfalls als Doppelhebel ausgebildet und schwenkbar an dem Bremsbetätigungshebel angelenkt, wobei eine an dem Ende des ersten Hebelarms angeordnete Eingriffsnase durch eine an dem Ende des zweiten Hebelarms angreifende Klinkenfeder in Richtung der Verzahnung vorgespannt wird. In dieser Ausführungsform ist die Druckstange der Löseeinrichtung nicht schenkbar mit der Feststellklinke verbunden, sondern weist an ihrem der Feststellklinke zugewandten Ende einen Stoßbereich auf, mit welchem die Druckstange in einer Betätigungsstellung die Feststellklinke entgegen der Vorspannung der Klinkenfeder aus einer Eingriffsposition auslenkt und die an dem zweiten Hebelarm angeordnete Eingriffsnase aus der Verzahnung ausrückt. Durch die fehlende Kopplung der Druckstange und der Feststellklinke in der Ruheposition der Druckstange werden Schwingungen der Feststellklinke bei einer Verlagerung entlang der Verzahnung nicht auf die Druckstange und somit nicht in das Innere des Kraftfahrzeugs übertragen. Nachteilig ist jedoch auch hier, dass die Rückverlagerungsbewegung der Druckstange beim Anschlagen in der Ruheposition zu einer hohen mechanischen Belastung der Druckstange und daran anschließender Komponenten führt und es zu störender Geräuschbildung kommt.

DE 101 27 505 A1 beschreibt eine Feststellbremse für ein Kraftfahrzeug mit einer eine Feststellklinke umfassenden Feststelleinrichtung und einer eine Druckstange umfassenden Löseeinrichtung. Die Feststellklinke ist als Doppelhebel mit einem ersten Hebelarm und einem zweiten Hebelarm ausgebildet, wobei an dem zweiten Hebelarm eine Eingriffsnase für ein Eingreifen in eine Verzahnung angeordnet ist. Der erste Hebelarm der Feststellklinke ist an seinem Ende in einem Verbindungselement geführt, wobei das Ende des ersten Hebelarms ein in dem Verbindungselement angeordnetes Langloch durchsetzt. Das Verbindungselement ist an seinem dem Langloch abgewandten Ende mit einer Druckstange verbunden, wobei Druckstange und Verbindungselement gegeneinander verschiebbar sind und mittels eines ersten Federelements gegeneinander vorgespannt werden. Die Druckstange ist mittels eines zweiten Federelements gegenüber einem Bremsbetätigungshebel in Richtung einer Ruheposition vorgespannt. Auch bei dieser Ausführungsform wirken bei einer Verlagerung der Druckstange aus einer Löseposition hin in zu der Ruheposition hohe mechanische Kräfte auf die Druckstange ein, wodurch ebenfalls störende Geräusche entstehen.

Es ist die Aufgabe der Erfindung, eine Feststellbremse für ein Kraftfahrzeug bew. eine druckalange feststellbremse zu schaffen, die ein geräuscharmes Betätigen und Lösen ermöglicht und bei der hohe mechanische Belastungen der Löseeinrichtung vermieden werden.

Diese Aufgabe wird erfindungsgemäß durch eine Feststellbremse mit den Merkmalen des Anspruchs 1 bzw. durch eine druckstange mit den Merkmalen des Anspruchs 19 gelöst.

Durch das erfindungsgemäße Vorsehen eines der Druckstange zugeordneten Dämpfungselements, wobei das Dämpfungselement zumindest in der Ruheposition der Druckstange mit dem Führungselement zusammenwirkt, wird vorteilhaft ermöglicht, dass eine Verlagerungsbewegung der Druckstange gegenüber dem Bremsbetätigungshebel auch bei einem Erreichen der jeweiligen Endposition der Bewegung ohne zu große Beschleunigungen bzw. zeitliche Änderungen der Beschleunigung erfolgt, so dass eine mechanische Belastung der Elemente der Feststellbremse einerseits und eine Geräuschentwicklung andererseits vorteilhaft vermieden werden. Vorteilhaft wird dabei insbesondere eine durch das Federelement angetriebene Verlagerungsbewegung der Druckstange in Richtung der Ruheposition gedämpft und ein hartes Anschlagen der Druckstange in der Ruheposition vermieden. Somit wird es vorteilhaft ermöglicht, das Federelement mit einer für den sicheren Betrieb der Feststellbremse notwendigen hohen Federkraft auszubilden, ohne die übrigen Element der Feststellbremse hohen Belastungen und damit einhergehendem erhöhten Verschleiß auszusetzen. Die gedämpfte Rückstellbewegung der Druckstange und insbesondere des damit verbundenen Auslöseelements erhöht weiter günstig den Bediencomfort der Feststellbremse für den Benutzer. Ferner wird insbesondere durch ein Zusammenwirken des Dämpfungselements mit dem Führungselement eine gute mechanische Dämpfung bewirkt, ohne das weitere Bauelemente benötigt werden.

Zweckmäßig ist das Führungselement so vorgesehen, dass es wenigstens teilweise in die Durchbrechung der Druckstange vorsteht. Besonders bevorzugt steht das Führungselement dabei in gleitendem Kontakt zu der Druckstange, womit auf besonders einfachere Weise eine sichere Führung einer Verlagerungsbewegung der Druckstange erreicht wird. Insbesondere kann durch eine Ausbildung des Führungselements als ein die Durchbrechung durchgreifender Stift oder Niet eine besonders einfach herstellbare und sichere Führung der Druckstange gewährleistet werden.

Zweckmäßig weist die Durchbrechung der Druckstange einen Anschlagsbereich für ein Zusammenwirken mit dem Führungselement auf. Hierdurch wird vorteilhaft die Ruheposition der Druckstange definiert und eine durch das Federelement angetriebene Verlagerungsbewegung begrenzt.

In einer besonders bevorzugten Ausgestaltung der Feststellbremse ist die Durchbrechung der Druckstange als Langloch ausgebildet. Vorzugsweise ist dabei die lange Achse des Langlochs parallel zu der Bewegungsrichtung der Druckstange angeordnet, so dass eine sichere Führung der Druckstange durch ein vorzugsweise die Durchbrechung durchsetzendes Führungselement gesichert ist. Es versteht sich, dass die Durchbrechung jedoch auch jede andere Ausgestaltung, insbesondere eine entlang der Bewegungsrichtung der Druckstange gekrümmte Form, aufweisen kann, wenn die Druckstange bei einer Verlagerung aus der Ruheposition in die Betätigungsposition keine gradlinige Bewegung ausführt.

Vorzugsweise ist das Dämpfungselement einem dem Anschlagsbereich benachbarten Bereich der Druckstange zugeordnet. Hierdurch wird auf baulich besonders einfache Weise eine Dämpfung der Druckstangenbewegung in einem Bereich nahe der Ruheposition der Druckstange ermöglicht.

Vorzugsweise sind die Druckstange und das Dämpfungselement einstückig ausgebildet. Hierdurch wird vorteilhaft sichergestellt, das Dämpfungselement und Druckstange sicher und dauerhaft miteinander verbunden sind und insbesonder kein Verrutschen des Dämpfungselements gegenüber der Druckstange aus der optimalen Position heraus möglich ist. Zudem werden erhöhte Herstellungskosten für ein nachträgliches Verbinden von Dämpfungselement und Druckstange vorteilhaft vermieden. In einer besonders bevorzugten Ausgestaltung sind Druckstange und Dämpfungselement einstückig als Kunstoffspritzteil hergestellt, was eine besonders preisgünstige Herstellung ermöglicht und gute mechanische Eigenschaften insbesondere auch hinsichtlich der Dämpfung gewährleistet. In einer alternativen Ausgestaltung sind Dämpfungselement und Druckstange aus unterschiedlichen Materialien und getrennt voneinander hergestellt, wodurch die einzelnen Bauteile jeweils auf bevorzugte mechanischen Eigenschaften optimiert werden können. Insbesondere können Druckstange und/oder Dämpfungselement aus einem Metall gefertigt sein, wobei für eine weitere Verbesserung der Oberflächeneigenschaften eine Oberflächenbeschichtung der Bauteile aus Kunststoff vorgesehen sein kann.

In einer bevorzugten Ausgestaltung ist das Dämpfungselement in einem wenigstens teilweise von dem Druckstangenmaterial freigeschnittenem Bereich angeordnet. Insbesondere, wenn die Druckstange und das Dämpfungselement einstückig ausgebildet sind und/oder aus Kunststoffmaterial bestehen, wird durch eine Ausbildung des Dämpfungselements als ein Teil der Druckstange, der von umgebendem Druckstangenmaterial freigeschnitten und direkt zu dem Anschlagsbereich benachbart ist, auf einfache Weise ein die notwendige Verformbarkeit aufweisendes und federnd verlagerbares Dämpfungselement geschaffen. In einer alternativen Ausgestaltung kann das Dämpfungselement auch durch eine Hinterschneidung des Anschlagsbereichs der Druckstange gebildet werden.

Vorzugsweise ist das Dämpfungselement aus einem elastischem Material ausgebildet. Dies ermöglicht vorteilhaft eine Dämpfung der Verlagerungsbewegung der Druckstange über einen relativ großen Verlagerungsbereich und somit eine wirksame Reduktion mechanischer Belastung.

Vorzugsweise ist das Dämpfungselement durch eine Verlagerung der Druckstange in Richtung der Ruheposition reversibel verlagerbar. In dieser bevorzugten Ausgestaltung wird vorteilhaft ermöglicht, dass das Dämpfungselement mechanisch wie eine Feder wirkt. Somit wird effektiv ein Anschlag der bewegten Druckstange in der Ruheposition gedämpft. Zweckmäßig ist die Feststellbremse als eine Handfeststellbremse ausgebildet, wobei der Bremsbetätigungshebel als Handbremshebel und das Auslöseelement als Druckknopf ausgebildet ist. Besonders bevorzugt ist dabei der Druckknopf mittels einer Verrastung an der Druckstange festgelegt.

In einer alternativen Ausgestaltung ist die Feststellbremse als Fußfeststellbremse und der Bremsbetätigungshebel als Pedal ausgebildet.

Vorzugsweise ist die Durchbrechung der Druckstange in einem von dem Auslöseelement abgewandeten Bereich der Druckstange angeordnet. Hierdurch wird, insbesondere wenn die Durchbrechung in einem Bereich nahe der Feststellklinke angeordnet ist, eine sichere Führung der Druckstange gewährleistet. Ebenso wird durch diese Ausgestaltung die Gefahr eines Ausbiegens der Druckstange verringert und sichergestellt, dass durch die Druckstange ein genau definierter und exakt ausgerichteter Stoß auf die Feststellklinke in der Löseposition der Druckstange ausgeübt wird.

Vorzugsweise ist die Klinkenfeder als Druckfeder ausgebildet. Besonders bevorzugt spannt das Federelement dabei die Druckstange mit einer im Vergleich zu der Klinkenfeder größeren Federkraft in eine der Vorspannungsrichtung der Klinkenfeder entgegengesetzte Richtung vor. Hierdurch wird ein unbeabsichtiges Lösen der Handbremse vermieden und eine verbesserte Betriebssicherheit der Handbremse erreicht. Vorteilhaft kann in dieser Ausführungsform die Federkraft der Klinkenfeder relativ niedrig bemessen werden, was mit einer besonders niedrigen Geräuschbildung bei einer Betätigung der Feststellbremse und der Verlagerung der Feststellklinke entlang der Verzahnung einhergeht.

Besonders bevorzugt verlagert die Druckstange erst in einem Bereich nahe der Löseposition die Feststellklinke in entgegen der Vorspannung der Klinkenfeder außer Eingriff mit der Verzahnung. In diese Ausgestaltung wird vorteilhaft eine Geräuschbildung bei der Betätigung der Feststellbremse vermieden, da während einer Verlagerungsbewegung der Feststellklinke entlang der Verzahnung entstehende Geräusche nicht durch ein mechanische Kopplung auf die Druckstange und damit in den Innenraum des Fahrzeugs übertragen werden.

In einer bevorzugten Ausgestaltung einer erfindungsgemäßen Feststellbremse ist das Führungselement als zylindrischer Stift ausgebildet, der in der Ruheposition der Druckstange mit dem Dämpfungselement zusammenwirkt. Besonders bevorzugt ist dem Stift ein umfangsmäßig auskragender Kopf zugeordnet. Insbesondere, wenn die Druckstange in einem dem Dämpfungselement zugeordneten Bereich eine Ausnehmung aufweist, wird durch den auskragenden Kopf vorteilhaft ein Zusammenwirken des Führungselements und des Dämpfungselements über eine größere Bewegungsstrecke der Druckstange erreicht, woraus eine verbesserte Dämpfung der Druckstangenbewegung resultiert.

In einer alternativen bevorzugten Ausgestaltung ist das Führungselement in der Ruheposition der Druckstange vollständig innerhalb der Durchbrechung angeordnet. In dieser Ausgestaltung weist das Führungselement vorzugsweise eine quader- oder zylinderförmige Gestalt auf, wodurch vorteilhaft eine einfachere Herstellung und Platzierung des Führungselements ermöglicht wird.

Zweckmäßig ist das Führungselement an dem Hebelhalter angeordnet. Dies ermöglicht auf einfache Weise eine sichere Führung der Druckstange. In einer alternativen Ausführungsform ist das Führungselement an der Feststellklinke angeordnet.

Eine erfindungsgemäße Druckstange für die Verwendung in einer Kraftfahrzeug-Feststellbremse umfasst ein erstes, einem Auslöseelement zuordenbares Ende, ein zweites, einer Feststellklinke zuordenbares Ende und eine durchgehende Öffnung zur Aufnahme eines Führungselements, wobei der durchgehenden Öffnung ein Dämpfungselement zugeordnet ist, das in einem unbelasteten Zustand wenigstens teilweise innerhalb der durchgehenden

Öffnung angeordnet ist und in einem belasteten Zustand vollständig in einen Bereich außerhalb der durchgehenden Öffnung verlagerbar ist. Durch das Vorsehen eines Dämpfungselements wird eine Druckstange für eine Kraftfahrzeug-Feststellbremse geschaffen, die während einer Verlagerungsbewegung mechanische Belastungen sowohl der Druckstange selbst als auch anderer, mit der Druckstange verbindbarer Elemente vorteilhaft reduziert und somit besonder geräuscharme, verschleißarme und komfortabel zu bedienende Feststellbremsen ermöglicht.

Vorzugsweise ist die durchgehende Öffnung als Langloch ausgebildet. Zweckmäßig kann das Langloch dabei als ein gerades oder gekrümmtes Langloch ausgebildet sein, wodurch jeweils vorteilhaft eine genaue Führung der Druckstange durch ein in das Langloch eingreifendes Führungselement ermöglicht wird.

In einer bevorzugten Ausgestaltung ist das Dämpfungselement einstückig mit der Druckstange ausgebildet. Dies vereinfacht vorteilhaft die Herstellung der erfindungsgemäßen Druckstange, da ein aufwändiges Platzieren und Verbinden von Dämpfungselement und Druckstange entfällt. Weiter wird hierdurch auch ein nachträgliches Lösen oder Verschieben des Dämpfungselements gegenüber der Druckstange vermieden.

Zweckmäßig ist die Druckstange aus einem Kunststoffmaterial hergestellt. Insbesondere, wenn die Druckstange und das Dämpfungselement einstückig ausgebildet sind, ergibt sich hierdurch vorteilhaft einerseits eine den Anforderungen genügende Stabilität der Druckstange und andererseits eine sehr gute Dämpfung der Druckstangenbewegung durch das Dämpfungselement.

Weitere Vorteile und Merkmale der Erfindung ergeben sich aus der nachfolgenden Beschreibung eines bevorzugten Ausführungsbeispiels sowie aus den abhängigen Ansprüchen.

Die Erfindung wird im Folgenden unter Bezugnahme auf die anliegenden Zeichnungen anhand eines bevorzugten Ausführungsbeispiels näher erläutert.
- Fig. 1: zeigt ein bevorzugtes Ausführungsbeispiel einer erfindungsgemäßen Feststellbremse in einer geschnittenen Ansicht.
- Fig. 2: zeigt ein Detail der in Fig. 1 dargestellten Feststellbremse in starker Vergrößerung.
- Fig. 3: zeigt den in Fig. 2 dargestellten Teil der Feststellbremse in einer Schnittansicht.

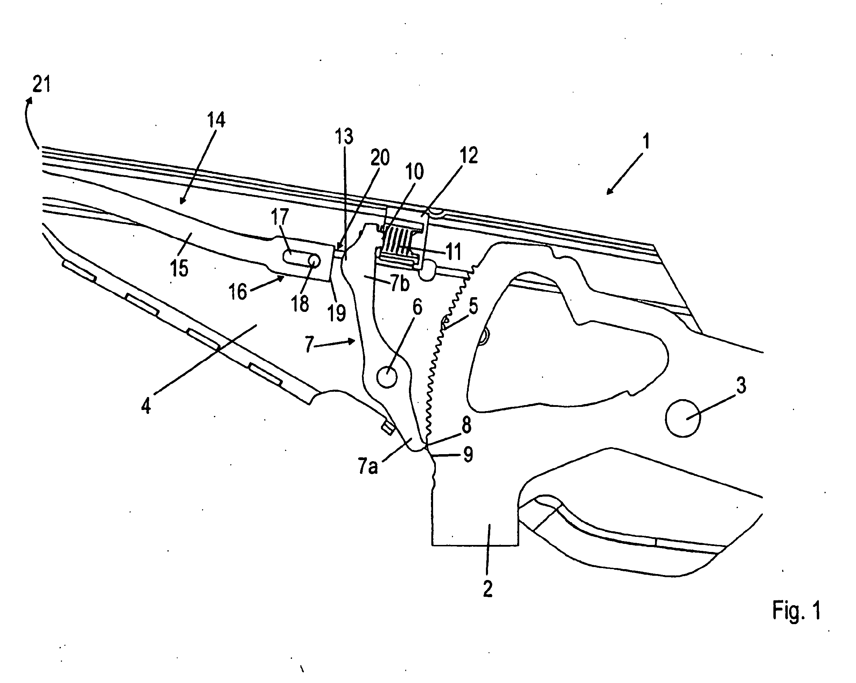

Das in Fig. 1 bis Fig. 3 dargestellte Ausführungsbeispiel einer erfindungsgemäßen Feststellbremse 1 für ein Kraftfahrzeug umfasst einen karosseriefest angeordneten Hebelhalter 2 und einen an dem Hebelhalter 2 mittels einer Gelenkverbindung 3 schwenkbar angeordneten Bremsbetätigungshebel 4. Der Hebelhalter 2 weist in einem Teilbereich eine Verzahnung 5 auf, welche auf einem Kreissegment angeordnet ist, dessen Mittelpunkt durch die Gelenkverbindung 3 gebildet wird. Eine Feststellklinke 7 ist um einen Drehpunkt 6 schwenkbar mit dem Bremsbestätigungshebel 4 verbunden und als Doppelhebel mit einem ersten Hebelarm 7a und einem zweiten Hebelarm 7b ausgebildet. An dem dem Drehpunkt 6 abgewandten Ende des ersten Hebelarms 7a weist die Feststellklinke 7 eine Eingriffsnase 8 auf, die mit der Verzahnung 7 zusammenwirkt und in einer vollständig gelösten Position der Feststellbremse in einer unterhalb der Verzahnung 5 angeordneten Ausnehmung 9 ruht. Der zweite Hebelarm 7b der Feststellklinke 7 weist an seinem dem Drehpunkt 6 abgewandten Ende eine Federaufnahme 10 auf, an der eine Klinkenfeder 11, die als Druckfeder ausgebildet ist, angreift. Die Klinkenfeder 11 ist in einem Gehäuse 12 an dem Bremsbetätigungshebel 4 angeordnet. Weiter weist der zweite Hebelarm 7b der Feststellklinke 7 einen Stoßabschnitt 13 für eine Wechselwirkung mit der Druckstange 14 auf.

Die Druckstange 14 ist verlagerbar an dem Bremsbetätigungshebel 4 gelagert und weist einen Druckstangenkörper 15 mit einem ersten Ende 16 und einem zweiten Ende (nicht dargestellt) auf. In dem ersten Ende 16 der Druckstange 14 ist eine als Langloch ausgebildete Durchbrechung 17 angeordnet, die gleitend auf einem fest an dem Bremsbetätigungshebel 4 angeordneten Führungselement 18 angeordnet ist. Durch das Zusammenwirken der Durchbrechung 17 und des vorliegend als Niet ausgebildeten Führungselements 18 wird eine Verlagerungsbewegung der Druckstange 14 geführt. In der Ruheposition der Druckstange 14 weist diese einen Abstand 20 zwischen dem Stoßbereich 13 der Feststellklinke 7 und einem Stoßbereich 19 der Druckstange auf.

Die Druckstange 14 ist durch ein im Bereich des zweiten Endes der Druckstange 14 angeordnetes Federelement (nicht dargestellt) in die von der Feststellklinke 7 abgewandte Richtung hin vorgespannt. Die Ruheposition der Druckstange 14 wird durch die Position definiert, in der die Druckstange 14 vollständig von der Feststellklinke 7 weg verlagert ist und in der das Führungselement 18 seitlich an dem dem Stoßbereich 19 zugekehrten Rand der Durchbrechung 17 anliegt.

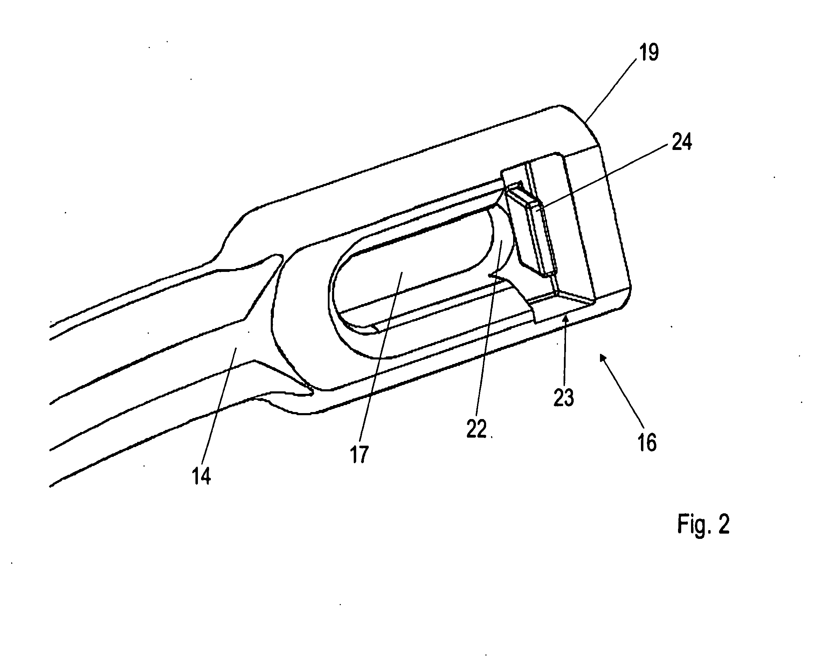

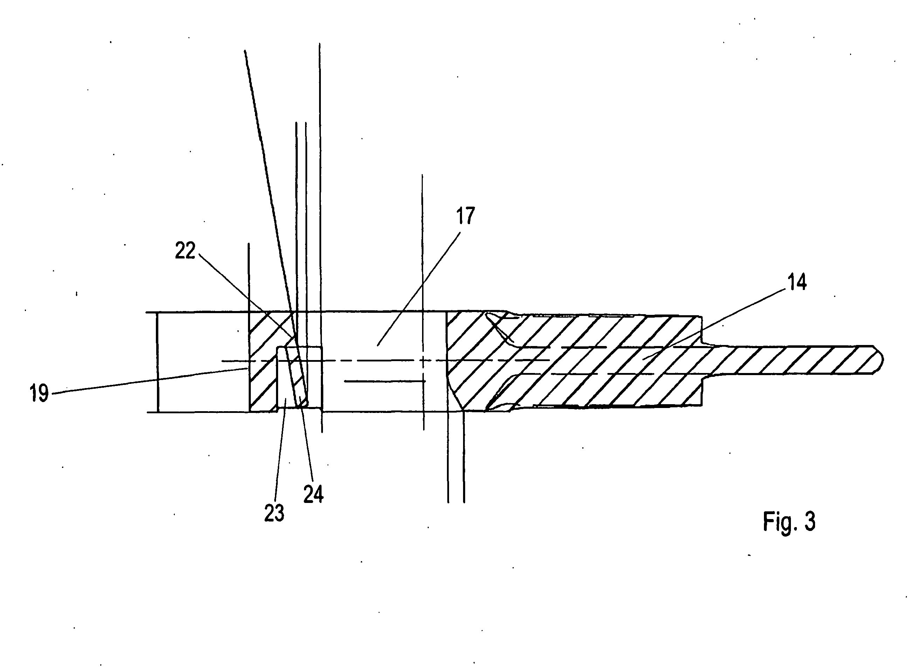

Wie insbesondere in Fig. 2 gut zu erkennen ist, ist das erste Ende der Druckstange 14 gegenüber einem mittleren Bereich der Druckstange 14 verdickt und im wesentlichen quaderförmig ausgebildet. Der Stoßbereich 19 ist auf der dem restlichen Druckstangenkörper abgewandten Seitenfläche des quaderförmigen Endes angeordnet. Die Durchbrechung 17 ist in Form eines Langlochs ausgebildet und durchsetzt das quaderförmige Ende im wesentlichen mittig und senkrecht zu zwei gegenüberliegenden Seitenflächen des Quaders. An dem dem Stoßbereich 19 zugewandten Ende der Durchbrechung 17 ist eine durch eine Materialaussparung gebildete Ausnehmung 23 vorgesehen, die einen Bereich mit im wesentlichen rechteckigen Umfang auspart und ausgehend von einer der durchbrochenen Seitenflächen etwa die halbe Dicke der Druckstange durchsetzt. Etwa in der Mitte der Ausnehmung 23 ist ein Dämpfungselement 24 vorliegend nach Art einer Blattfeder ausgebildet. Wie insbesondere in Fig. 3 gut zu erkennen ist, ist das Dämpfungselement 24 vollständig in der Aussparung 23 angeordnet und ragt in dem in Fig. 3 dargestellten nicht belasteten Zustand teilweise in die Durchbrechung 17 hinein. Das Dämpfungselement weist dabei einen Neigungswinkel von etwa 80° gegenüber der durchbrochenen Seitenfläche auf. Vorliegend ist das Dämpfungselement 24 einstückig mit der Druckstange 14 ausgebildet.

In dem nicht von der Ausnehmung 23 durchsetzten Bereich bildet das dem Stoßbereich 19 zugewandte Ende der Durchbrechung 17 einen Anschlagsbereich 22 aus, an dem das Führungselement 18 in der Ruheposition der Druckstange 14 anliegt.

Die Erfindung funktioniert nun wie folgt:

Ausgehend von einer vollständig abgelegten Position wird die Feststellbremse durch eine Schwenkbewegung des Bremsbetätigungshebels 4 in Richtung des Pfeils 21 betätigt. Hierbei wird die Eingriffsnase 8 der Feststellklinke 7 entlang der Verzahnung 5 verlagert und in ihrer Endposition durch die Klinkenfeder 11 in die Verzahnung 5 vorgespannt. In der festgestellten Position befindet sich die Druckstange 14 in ihrer Ruheposition, das heißt das Führungselement 18 liegt an dem Anschlagsbereich 22 der Durchbrechung 17 an, wobei zwischen dem Endbereich 19 der Druckstange 14 und dem Stoßabschnitt 13 der Feststellklinke 7 ein Abstand 20 vorgesehen ist. Gleichzeitig befindet sich das Dämpfungselement 24 in der Ruheposition der Druckstange 14 in einem belasteten Zustand und ist durch das Führungselement 18 vollständig aus dem Bereich der Durchbrechung 17 herausgedrängt. Das Dämpfungselement 24 weist in dem belasteten Zustand eine Neigung von etwa 90° gegenüber der durchbrochenen Seitenfläche auf.

Um die Feststellbremse 1 zu lösen, wird die Druckstange 14 durch Betätigung eines (nicht dargestellten) Druckknopfs ausgehend von ihrer Ruheposition entgegen einer von einem (nicht dargestellten) Federelement ausgeübten Vorspannung in Richtung auf die Feststellklinke 7 in Richtung ihrer Löseposition verlagert. Zugleich wird der Bremsbetätigungshebel 4 angehoben. In der Löseposition der Druckstange 14 wird die Feststellklinke 7 durch eine Wechselwirkung ihres Stoßabschnitts 13 mit dem Stoßbereich 19 der Druckstange 14 aus der Verzahnung 5 ausgerückt. Die Druckstange 14 wird während ihrer Verlagerungsbewegung entlang des die Durchbrechung 17 durchgreifenden Führungselements 18 verlagert, wobei sich der Anschlagbereich 22 von dem Führungselement 18 entfernt und das Dämpfungselement in einen unbelasteten Zustand gelangt, in dem es in die Durchbrechung 17 hineinragt. In der ausgerückten Position der Feststellklinke 7 kann der Bremsbetätigungshebel 4 entgegen der Richtung des Pfeils 21 verschwenkt und abgelegt werden. Nach Beendigung der Schwenkbewegung des Bremsbetätigungshebels 4 und einem Lösen des Druckknopfes wird die Druckstange 14 durch die Vorspannung des Federelements angetrieben zurück in ihre Ruheposition verlagert. Durch die Verlagerungsbewegung der Druckstange 14 kommt das Dämpfungselement 24 nach und nach stärker mit dem Führungselement 18 in Kontakt und wird von diesem aus dem Bereich der Durchbrechung 17 verdrängt, wodurch die Verlagerungsbewegung der Druckstange zunehmend vorzögert wird. Ein plötzliches Anschlagen des Führungselements 18 in dem Anschlagbereich 22 der Durchbrechung 17 und eine damit einhergehende hohe mechanische Beanspruchung der Druckstange 14 und des Druckknopfes wird somit vermieden. Das Dämpfungselement 24 übt nach Art einer Blattfeder eine Dämpfungskraft auf die Druckstange 14 aus.

Vorstehend wurde ein Ausführungsbeispiel einer erfindungsgemäßen Feststellbremse beschrieben, bei der das Dämpfungselement einstückig mit der Druckstange ausgebildet ist. Es versteht sich, dass das Dämpfungselement auch als separates Bauteil ausgebildet sein kann.

Bei dem vorstehend beschriebenen Ausführungsbeispiel ist die Klinkenfeder als Druckfeder ausgebildet. Es versteht sich, dass die Klinkenfeder ebenso als eine Zugfeder ausgebildet sein kann, die gegebenenfalls mit dem die Druckstange vorspannenden Federelement gekoppelt sein kann. Es versteht sich ferner, dass die Klinkenfeder auch eine beliebige andere Form haben kann und insbesondere als eine Drehfeder oder als eine Blattfeder ausgebildet sein kann.

Ferner ist bei dem vorstehend beschriebenen Ausführungsbeilspiel einer efindungsgemäßen Feststellbremse die Feststellklinke als durchgehender, zweiarmiger Hebel ausgebildet. Es versteht sich, dass die Feststellklinke auch als ein einarmiger Hebel ausgebildet sein kann. Ebenso kann die Feststellklinke auch als eine zweiteilige Feststellklinke mit getrennten Klinkenarmen ausgebildet sein, zwischen denen nur für eine der möglichen Betätigungsrichtungen eine Kopplung vorgesehen ist.

Es versteht sich ferner, dass das Führungselement einstückig mit einem Teil der Feststellklinke ausgebildet oder mit dieser gekoppelt sein kann. Ebenso kann in einer altemativen Ausgestaltung einer erfindungsgemäßen Feststellbremse das Führungselement mit dem Hebelhalter verbunden sein.

## Patentansprüche

1. Feststellbremse (1) für ein Kraftfahrzeug, umfassend
einen Bremsbetätigungshebel (4), der schwenkbar an einem Hebelhalter (2) angeordnet ist,
eine Kopplungseinheit zur Kopplung des Bremsbetätigungshebels (4) mit einem Bremsseil,
eine Feststelleinrichtung, die eine an dem Hebelhalter (2) angeordnete Verzahnung (5) und eine in die Verzahnung (5) eingreifende Feststellklinke (7) umfasst,
eine Klinkenfeder (11) zur Vorspannung der Feststellklinke (7) in Richtung auf die Verzahnung (5),
eine Löseeinrichtung, die eine entlang des Bremsbetätigungshebels (4) zwischen einer Ruheposition und einer Löseposition verlagerbare Druckstange (14) und ein Auslöseelement umfasst, wobei die Druckstange (14) eine Durchbrechung (17) aufweist,
ein Führungselement (18) zur Führung der Druckstange (14) und
ein Federelement zur Vorspannung der Druckstange (14),
**dadurch gekennzeichnet,**
**dass** der Druckstange (14) ein Dämpfungselement (24) zugeordnet ist, und
**dass** das Dämpfungselement (24) zumindest in der Ruheposition der Druckstange (14) mit dem Führungselement (18) zusammenwirkt.

2. Feststellbremse nach Anspruch 1, **dadurch gekennzeichnet, dass** das Führungselement (18) wenigstens teilweise in die Durchbrechung (17) der Druckstange (14) vorsteht.

3. Feststellbremse nach Anspruch 1 oder 2, **dadurch gekennzeichnet, dass** die Durchbrechung (17) einen Anschlagsbereich (22) für ein Zusammenwirken mit dem Führungselement (18) aufweist.

4. Feststellbremse nach einem der Ansprüche 1 bis 3, **dadurch gekennzeichnet, dass** die Durchbrechung (17) als Langloch ausgebildet ist.

5. Feststellbremse nach Anspruch 3 oder 4, **dadurch gekennzeichnet, dass** das Dämpfungselement (24) einem dem Anschlagsbereich (22) benachbarten Bereich der Druckstange (14) zugeordnet ist.

6. Feststellbremse nach einem der Ansprüche 1 bis 5, **dadurch gekennzeichnet, dass** das Dämpfungselement (24) und die Druckstange (14) einstückig ausgebildet sind, und dass das Dämpfungselement (24) in einem wenigstens teilweise von dem Druckstangenmaterial freigeschnittenen Bereich angeordnet ist.

7. Feststellbremse nach einem der Ansprüche 1 bis 6, **dadurch gekennzeichnet, dass** das Dämpfungselement (24) aus einem elastischen Material ausgebildet ist.

8. Feststellbremse nach einem der Ansprüche 1 bis 7, **dadurch gekennzeichnet, dass** bei Erreichen der Ruheposition der Druckstange (14) das Dämpfungselement (24) reversibel deformiert wird.

9. Feststellbremse nach einem der Ansprüche 1 bis 8, **dadurch gekennzeichnet, dass** der Bremsbetätigungshebel (4) als Handbremshebel und das Auslöseelement als Druckknopf ausgebildet ist.

10. Feststellbremse nach einem der Ansprüche 1 bis 8, **dadurch gekennzeichnet, dass** der Bremsbetätigungshebel (4) als Fußpedal ausgebildet ist.

11. Feststellbremse nach einem der Ansprüche 1 bis 10, **dadurch gekennzeichnet, dass** die Durchbrechung (17) in einem von dem Auslöseelement abgewandten Bereich der Druckstange (14) angeordnet ist.

12. Feststellbremse nach einem der Ansprüche 1 bis 11, **dadurch gekennzeichnet, dass** das Federelement die Druckstange (14) mit einer im Vergleich zu der Klinkenfeder (11) größeren Federkraft in Richtung der Ruheposition vorspannt.

13. Feststellbremse nach einem der Ansprüche 1 bis 12, **dadurch gekennzeichnet, dass** die Druckstange (14) erst in einem Bereich nahe ihrer Löseposition die Feststellklinke (7) entgegen der Vorspannung der Klinkenfeder (11) außer Eingriff mit der Verzahnung (5) verlagert.

14. Feststellbremse nach einem der Ansprüche 1 bis 13, **dadurch gekennzeichnet, dass** das Führungselement (18) als zylindrischer Stift ausgebildet ist, der in der Ruheposition der Druckstange (14) mit dem Dämpfungselement (24) zusammenwirkt.

15. Feststellbremse nach einem der Ansprüche 1 bis 14, **dadurch gekennzeichnet, dass** das Führungselement (18) in der Ruheposition der Druckstange (14) vollständig innerhalb der Durchbrechung (17) angeordnet ist.

16. Feststellbremse nach einem der Ansprüche 1 bis 15, **dadurch gekennzeichnet, dass** das Führungselement (18) an dem Hebelhalter (2) angeordnet ist.

17. Feststellbremse nach einem der Ansprüche 1 bis 16, **dadurch gekennzeichnet, dass** das Führungselement (18) an der Feststellklinke (7) angeordnet ist.

18. Kraftfahrzeug, umfassend eine Kraftfahrzeug-Feststellbremse nach einem der Ansprüche 1 bis 17.

19. Druckstange (14) für die Verwendung in einer Kraftfahrzeug-Feststellbremse, umfassend
ein erstes, einem Auslöseelement zuordenbares Ende,
ein zweites, einer Feststellklinke (7) zuordenbares Ende, und
eine durchgehende Öffnung (17) zur Aufnahme eines Führungselements (18),
**dadurch gekennzeichnet,**
**dass** der durchgehenden Öffnung (17) ein Dämpfungselement (24) zugeordnet ist, das in einem unbelasteten Zustand wenigstens teilweise innerhalb der durchgehenden Öffnung (17) angeordnet ist und in einem belasteten Zustand vollständig in einen Bereich außerhalb der durchgehenden Öffnung (17) verlagerbar ist.

20. Druckstange nach Anspruch 19, **dadurch gekennzeichnet, dass** die durchgehende Öffnung (17) als Langloch ausgebildet ist.

21. Druckstange nach Anspruch 19 oder 20, **dadurch gekennzeichnet, dass** das Dämpfungselement (24) einstückig mit der Druckstange (14) ausgebildet ist.

22. Druckstange nach einem der Ansprüche 19 bis 21, **dadurch gekennzeichnet, dass** die Druckstange (14) aus einem Kunststoffmaterial ausgebildet ist.

23. Feststellbremse für ein Kraftfahrzeug, **gekennzeichnet durch** eine Druckstange nach einem der Ansprüche 19 bis 22.

## Claims

1. A parking brake (1) for a motor vehicle, comprising
a brake actuation lever (4) which is arranged pivotably on a lever holder (2),
a coupling unit for coupling the brake actuation lever (4) to a brake cable,
a locking device which comprises a toothing (5) arranged on the lever holder (2) and a locking catch (7) engaging in the toothing (5),
a catch spring (11) for preloading the locking catch (7) in the direction of the toothing (5),
a release device which includes a push rod (14) which is displaceable along the brake actuation lever (4) between an inoperative position and a release position, and a release element, the push rod (14) having an aperture (17),
a guide element (18) for guiding the push rod (14), and
a spring element for preloading the push rod (14),
**characterized in**
**that** a damping element (24) is assigned to the push rod (14), and
**that** the damping element (24) cooperates with the guide element (18) at least in the inoperative position of the push rod (14).

2. The parking brake as claimed in claim 1, **characterized in that** the guide element (18) projects at least partially into the aperture (17) of the push rod (14).

3. The parking brake as claimed in claim 1 or 2, **characterized in that** the aperture (17) has a stop region (22) for cooperating with the guide element (18).

4. The parking brake as claimed in one of claims 1 to 3, **characterized in that** the aperture (17) is configured as a slot.

5. The parking brake as claimed in claim 3 or 4, **characterized in that** the damping element (24) is assigned to a region of the push rod (14) adjacent to the stop region (22).

6. The parking brake as claimed in one of claims 1 to 5, **characterized in that** the damping element (24) and the push rod (14) are formed integrally, and that the damping element (24) is arranged in a region which is relieved at least partially of the material of the push rod.

7. The parking brake as claimed in one of claims 1 to 6, **characterized in that** the damping element (24) is formed from an elastic material.

8. The parking brake as claimed in one of claims 1 to 7, **characterized in that**, upon attainment of the inoperative position of the push rod (14), the damping element (24) is deformed reversibly.

9. The parking brake as claimed in one of claims 1 to 8, **characterized in that** the brake actuation lever (4) is configured as a handbrake lever and the release element as a push button.

10. The parking brake as claimed in one of claims 1 to 8, **characterized in that** the brake actuation lever (4) is in the form of a foot pedal.

11. The parking brake as claimed in one of claims 1 to 10, **characterized in that** the aperture (17) is arranged in a region of the push rod (14) oriented away from the release element.

12. The parking brake as claimed in one of claims 1 to 11, **characterized in that** the spring element preloads the push rod (14) in the direction of the inoperative position with a spring force which is greater in comparison to the catch spring (11).

13. The parking brake as claimed in one of claims 1 to 12, **characterized in that** the push rod (14) moves the locking catch (7) out of engagement with the toothing (5) against the preload of the catch spring (11) only in a region close to the release position of the push rod (14).

14. The parking brake as claimed in one of claims 1 to 13, **characterized in that** the guide element (18) is configured as a cylindrical pin which cooperates with the damping element (24) in the inoperative position of the push rod (14).

15. The parking brake as claimed in one of claims 1 to 14, **characterized in that** the guide element (18) is arranged completely within the aperture (17) in the inoperative position of the push rod (14).

16. The parking brake as claimed in one of claims 1 to 15, **characterized in that** the guide element (18) is arranged on the lever holder (2).

17. The parking brake as claimed in one of claims 1 to 16, **characterized in that** the guide element (18) is arranged on the locking catch (7).

18. A motor vehicle including a motor vehicle parking brake as claimed in one of claims 1 to 17.

19. A push rod (14) for use in a motor vehicle parking brake, including
a first end which can be assigned to a release element,
a second end which can be assigned to a locking catch (7), and
a continuous opening (17) for receiving a guide element (18),
**characterized in**
**that** a damping element (24) being assigned to the continuous opening (17) in an unloaded state is arranged at least partially within the continuous opening (17) and in a loaded state can be displaced completely into a region outside the continuous opening (17).

20. The push rod as claimed in claim 19, **characterized in that** the continuous opening (17) is configured as a slot.

21. The push rod as claimed in claim 19 or 20, **characterized in that** the damping element (24) is formed integrally with the push rod (14).

22. The push rod as claimed in one of claims 19 to 21, **characterized in that** the push rod (14) is formed from a plastics material.

23. A parking brake for a motor vehicle, **characterized by** a push rod as claimed in one of claims 19 to 22.

## Revendications

1. Frein de stationnement (11) pour véhicule automobile, ledit frein de stationnement comportant
un levier d'actionnement de frein (4) qui est disposé, de façon à pouvoir pivoter, au niveau d'un support de levier (2),
une unité de couplage destinée à coupler le levier d'actionnement de frein (4) à un câble de frein,
un dispositif de blocage qui comporte une denture (5) disposée au niveau du support de levier (2) et un cliquet de blocage (7) s'engageant dans la denture (5),
un ressort de cliquet (11) destiné à précontraindre le cliquet de blocage (7) en direction de la denture (5),
un dispositif de déblocage qui comporte une barre de compression (14), qui peut être déplacée le long du levier d'actionnement de frein (4) entre une position de repos et une position de déblocage, et un élément de déclenchement, la barre de compression (14) comportant un passage (17),
un élément de guidage (18) destiné à guider la barre de compression (14) et
un élément élastique destiné à précontraindre la barre de compression (14),
**caractérisé en ce que**
un élément d'amortissement (24) est associé à la barre de compression (14) et **en ce que**
l'élément d'amortissement (24) coopère avec l'élément de guidage (18) au moins lorsque la barre de compression (14) est dans la position de repos.

2. Frein de stationnement selon la revendication 1, **caractérisé en ce que** l'élément de guidage (18) fait saillie au moins partiellement dans le passage (17) ménagé dans la barre de compression (14).

3. Frein de stationnement selon la revendication 1 ou 2, **caractérisé en ce que** le passage (17) possède une région de butée (22) destinée à coopérer avec l'élément de guidage (18).

4. Frein de stationnement selon l'une des revendications 1 à 3, **caractérisé en ce que** le passage (17) est conformé en trou oblong.

5. Frein de stationnement selon la revendication 3 ou 4, **caractérisé en ce que** l'élément d'amortissement (24) est associé à une région de la barre de compression (14) qui est adjacente à la région de butée (22).

6. Frein de stationnement selon l'une des revendications 1 à 5, **caractérisé en ce que** l'élément d'amortissement (24) et la barre de compression (14) sont conformés d'une seule pièce, et **en ce que** l'élément d'amortissement (24) est disposé dans une région découpée au moins partiellement dans la matière de la barre de compression.

7. Frein de stationnement selon l'une des revendications 1 à 6, **caractérisé en ce que** l'élément d'amortissement (24) est formé à partir d'une matière élastique.

8. Frein de stationnement selon l'une des revendications 1 à 7, **caractérisé en ce que**, lorsque la barre de compression (14) a atteint la position de repos, l'élément d'amortissement (24) est déformé de façon réversible.

9. Frein de stationnement selon l'une des revendications 1 à 8, **caractérisé en ce que** le levier d'actionnement de frein (4) est conformé en levier de frein à main et l'élément de déclenchement est conformé en bouton-poussoir.

10. Frein de stationnement selon l'une des revendications 1 à 8, **caractérisé en ce que** le levier d'actionnement de frein (4) est conformé en pédale de pied.

11. Frein de stationnement selon l'une des revendications 1 à 10, **caractérisé en ce que** le passage (17) est ménagé dans une région de la barre de compression (14) qui est opposée à l'élément de déclenchement.

12. Frein de stationnement selon l'une des revendications 1 à 11, **caractérisé en ce que** l'élément élastique précontraint la barre de compression (14) en direction de la position de repos avec une force élastique supérieure à celle du ressort de cliquet (11).

13. Frein de stationnement selon l'une des revendications 1 à 12, **caractérisé en ce que** la barre de compression (14) déplace le cliquet de blocage (7) hors d'engagement la denture (5), en s'opposant à la précontrainte exercée par le ressort de cliquet (11), seulement dans une région proche de sa position de déblocage.

14. Frein de stationnement selon l'une des revendications 1 à 13, **caractérisé en ce que** l'élément de guidage (18) est conformé en tige cylindrique qui coopère avec l'élément d'amortissement (24) lorsque la barre de compression (14) est dans la position de repos.

15. Frein de stationnement selon l'une des revendications 1 à 14, **caractérisé en ce que** l'élément de guidage (18) est disposé totalement à l'intérieur du passage (17) lorsque la barre de compression (14) est dans la position de repos.

16. Frein de stationnement selon l'une des revendications 1 à 15, **caractérisé en ce que** l'élément de guidage (18) est disposé au niveau du support de levier (2).

17. Frein de stationnement selon l'une des revendications 1 à 16, **caractérisé en ce que** l'élément de guidage (18) est disposé au niveau du cliquet de blocage (7).

18. Véhicule automobile, comportant un frein de stationnement de véhicule automobile selon l'une des revendications 1 à 17.

19. Barre de compression (14) destinée être utilisée dans un frein de stationnement de véhicule automobile, ladite barre de compression comprenant
une première extrémité qui peut être associée à un élément de déclenchement,
une seconde extrémité qui peut être associée à un cliquet de blocage (7), et
une ouverture traversante (17) destinée à recevoir un élément de guidage (18),
**caractérisé en ce que**
à l'ouverture traversante (17) est associé un élément d'amortissement (24) qui est disposé, dans un état non chargé, au moins partiellement à l'intérieur de l'ouverture traversante (17) etqui peut être d'placé, dans un état chargé, vers une région située à l'extérieur de l'ouverture traversante (17).

20. Barre de compression selon la revendication 19, **caractérisée en ce que** l'ouverture traversante (17) est conformée en trou oblong.

21. Barre de compression selon la revendication 19 ou 20, **caractérisée en ce que** l'élément d'amortissement (24) est conformé d'une seule pièce avec la barre de compression (14).

22. Barre de compression selon l'une des revendications 19 à 21, **caractérisée en ce que** la barre de compression (14) est formée à partir d'une matière plastique.

23. Frein de stationnement pour véhicule automobile, **caractérisé par** une barre de compression selon l'une des revendications 19 à 22.
